# EUROPÄISCHE PATENTANMELDUNG

(11) **EP 2 677 216 A1**
(43) Veröffentlichungstag der Anmeldung: **25.12.2013**
(21) Anmeldenummer: 13169958.9
(22) Anmeldetag: 31.05.2013
(51) Int. Cl.: F16K 31/04

(54) **Ventilaufsatz für ein Heizkörperregelventil mit elektronischem Motor und Feder sowie mit oder ohne Ausdehnungskörper**

(30) Priorität: 18.06.2012 DE 102012011962
(71) Anmelder: Robert Bosch GmbH, 70442 Stuttgart (DE)
(72) Erfinder: Kleineikenscheidt, Gerold, 73249 Wernau (DE); Boehm, Karsten, 73728 Esslingen (DE); Lemyre, Richard, Montreal, Quebec, H1K 2M8 (CA)

(57) **Zusammenfassung**

Die Erfindung betrifft einen Ventilaufsatz (1) für ein Heizkörperregelventil (12) mit einem elektronischen Motor (2) als Antrieb, der über auf einen Ventilstift (8) auf ein Ventilelement des Heizkörperregelventils wirkt. Um die vom elektronischen Motor aufzubringende Kraft zu reduzieren, ist eine Feder (5) vorgesehen, die in Reihe mit dem Motor und dem Ventilstift angeordnet ist. Zur Feineinstellung der Temperatur kann zusätzlich ein temperaturabhängiges Ausdehnungselement (6) integriert sein, wodurch eine sehr energieeffiziente Temperatursteuerung ermöglicht wird. Als Energiequelle wird ein thermoelektrischer Generator (10) verwendet, der die gewonnene elektrische Energie in eine Energiespeichereinrichtung einbringt. Zusätzlich kann eine unterstützende Energieversorgung mittels eines Photovoltaikelements erfolgen. Weiterhin kann der erfindungsgemäße Ventilaufsatz mittels einer Benutzerschnittstelle direkt am Ventilaufsatz programmiert werden, oder aber auch drahtlos über externe Geräte, indem die Benutzerschnittstelle ein Funkstandard zur Datenübertragung aufweist.

## Beschreibung

Die Erfindung betrifft einen Ventilaufsatz insbesondere für ein Heizkörperregelventil nach dem Oberbegriff von Anspruch 1 und ein Heizkörperregelventil mit einem Ventilaufsatz nach Anspruch 10.

Im Stand der Technik sind verschiedene Ausführungsformen von Ventilaufsätzen für Heizkörperregelventile beschrieben. DE 93 12 588 U1 beschreibt einen Ventilaufsatz mit einem elektronischen Motor und einem Temperatur-Weggeber. Das Ventil wird mit dem elektronischen Motor betätigt. Ein elektronischer Motor wird häufig auch als Elektromotor beschrieben. Über ein Getriebe bewegt der Motor eine Spindel und bewirkt damit eine Verschiebung des Temperatur-Weggebers. Diese Bewegung wird über einen Stößel auf ein Ventilelement übertragen. Auf diese Weise öffnet oder schließt das Heizkörperventil entsprechend der voreingestellten Temperatur. Die Temperaturfeinregulierung erfolgt durch den Temperatur-Weggeber. Dabei wird die für den Motor benötigte elektrische Energie durch Solarzellen bereitgestellt, die an einem Gehäuse des Ventilaufsatzes angebracht sind. Die von den Solarzellen erzeugte elektrische Energie wird in Akkumulatoren gespeichert. Über eine Tastatur und eine Anzeige an einer Steuereinheit, werden die gewünschten Schaltzeiten und dazugehörigen Raumtemperaturen (Solltemperaturen) eingegeben.

Von Nachteil bei dieser Lösung ist, dass der elektronische Motor zum einen viel Energie verbraucht, weil im Getriebe und den vielen Kopplungsstellen viele Reibungsverluste auftreten. Dadurch nimmt der Wirkungsgrad ab und der elektronische Motor muss ausreichend stark dimensioniert sein, wodurch die Baugröße dieses Motors relativ groß ist. Weiterhin ist durch das vorhandene Getriebe die Temperaturfeinregulierung nur sehr ungenau möglich. Weiterhin benötigt der vorgesehen Akkumulator, um den Aufsatz auch in der Dunkelheit betreiben zu können, zusätzlichen Bauraum und vergrößert damit den Ventilaufsatz, so dass dieser an Heizkörpern sehr unvorteilhaft aussieht.

DE 10 2005 025 501 A1 beschreibt einen Heizkörperventil-Thermostataufsatz mit einem elektronischen Motor. Die Energie zur Betreibung des Motors wird mittels eines thermoelektrischen Generators erzeugt und durch Photovoltaikelemente unterstützt. Der thermoelektrische Generator besteht aus in Reihe geschalteten Thermoelementen und bezieht die elektrische Energie aus einer Temperaturdifferenz zweier unterschiedlicher Metalle oder Halbleiter. Diese Energieerzeugung beruht auf dem Seebeck-Effekt. Die Einstellung der gewünschten Temperatur wird über ein am Ventilaufsatz befindliches Eingabe- und Steuergerät vorgenommen.

Von Nachteil bei diesem Heizkörperventil-Thermostataufsatz ist, dass der elektronische Motor viel Energie verbraucht, die nicht immer komplett vom thermoelektrischen Generator geliefert werden kann. Dieser kann zwar von einem Photovoltaikelement unterstützt werden, aber das funktioniert nur bei ausreichend starkem Lichteinfall. Bei schlechten Lichtverhältnissen kann eine Ventilbedienung nicht immer einwandfrei gewährleistet werden. Zudem ist der elektronische Motor unpräzise in der Ansteuerung der Position des Ventilstifts, wodurch der Motor zur Erreichung der gewünschten Temperatur das Ventil häufig öffnen bzw. schließen muss. Wie auch bei der DE 93 12 588 ist auch bei der DE 10 2005 025 501 A1 die Einstellung der Wunschtemperatur über ein Display möglich.

Der Erfindung liegt die Aufgabe zugrunde, die Nachteile des Standes der Technik zu beseitigen und einen Ventilaufsatz zur Verfügung zu stellen, der wenig Bauraum benötigt. Weiterhin soll der Ventilaufsatz günstig und leicht herstellbar sein.

Erfindungsgemäß wird dies mit den Merkmalen der Patentansprüche 1 und 10 gelöst. Vorteilhafte Weiterbildungen sind den Unteransprüchen zu entnehmen.

Bei einem Ventilaufsatz, insbesondere für ein Heizkörperregelventil, mit einem Gehäuse, in dem ein elektronischer Motor angeordnet ist, der mit einem Ventilstift zusammenwirkt, sieht die Erfindung vor, dass eine Feder in Reihe mit dem elektronischen Motor auf den Ventilstift wirkt.

Der erfindungsgemäße Ventilaufsatz für ein Heizkörperregelventil kann beispielsweise mit einem Regelventil verbunden werden und damit eine automatische und zeitabhängige Temperaturregulierung in Räumen ermöglichen. Das Regelventil reguliert den Wasserdurchfluss durch einen Heizkörper. Über den Ventilstift wird die Stellbewegung des elektronischen Motors auf ein Ventilelement (z.B. Ventilteller) des Heizkörperregelventils übertragen. Auf diese Weise erfolgt eine Temperaturkontrolle. Diese Ausgestalung des Ventilaufsatzes wird Variante 1 genannt.

Eine Feder erzeugt einen Gegendruck über die in Reihe geschalteten Bauelemente auf den Ventilstift. So wird die vom elektronischen Motor zum Betätigen des Ventilstifts aufzubringende Kraft verringert. Durch diese Kraftreduktion muss der elektronische Motor weniger Leistung aufbringen und kann kleiner dimensioniert werden, was sich günstig auf die Größe des Ventilaufsatzes auswirkt. Auch der Energieverbrauch des elektronischen Motors kann so verringert werden.

In einer weiteren Ausführungsform, die Variante 2 genannt wird, ist ein temperaturabhängiges Ausdehnungselement vorgesehen, welches in Reihe mit dem elektronischen Motor, der Feder und dem Ventilstift angeordnet ist und insbesondere axial beweglich ist. Das temperaturabhängige Ausdehnungselement wirkt vorzugsweise direkt auf den Ventilstift und erlaubt durch seine temperaturabhängige Wärmeausdehnung, bzw. Schrumpfung eine vollkommen autarke Verstellung der Durchflussmenge durch den Heizkörper und kann somit eine automatische Temperaturregelung und eine Feinregulierung der Temperatur übernehmen, ohne dabei elektrische Energie zu verbrauchen. Die Fein- oder Nachregulierung des Ventilhubs wird mittels der thermischen Ausdehnung des Ausdehnungselements vorgenommen, während die Sollwert-Einstellung über den elektronischen Motor erfolgt. Somit erfolgt die Ventilverstellung über den Ventilstift mittels eines Hybridantriebs, der aus einer Kombination aus dem elektronischen Motor mit dem temperaturabhängigen Ausdehnungselements besteht und somit äußerst energiesparend ist. Die Feder, der Motor und das temperaturabhängige Ausdehnungselement sind in Reihe mit dem Ventilstift angeordnet. Ein Kraftfluss erfolgt also immer durch alle diese Elemente.

Weiterhin ist vorteilhaft, wenn der elektronische Motor axial beweglich in dem Gehäuse des Ventilaufsatzes angeordnet ist, wobei die Feder insbesondere zwischen elektronischem Motor und Gehäuse angeordnet ist. Dadurch kann die Federkraft optimal ausgenutzt werden, und die vom elektronischen Motor aufzubringende Kraft zum Verstellen des Ventilstifts verringert werden. Somit kann ein schwächerer elektronischer Motor verbaut werden, der einerseits weniger Leistung aufbringen muss und somit auch kleiner dimensioniert werden kann. Andererseits verringert sich damit ein Energieverbrauch des elektronischen Motors, so dass auf eine zusätzliche Energieversorgung mittels einer Batterie verzichtet werden kann.

Eine andere Ausführungsform sieht vor, dass der elektronische Motor und ein Getriebe in einem Antriebsgehäuse angeordnet sind, wobei das Antriebsgehäuse axial verschiebbar gelagert ist. Das axial verschiebbare Antriebsgehäuse hat den Vorteil, dass der elektronische Motor und das Getriebe zusammen in diesem Antriebsgehäuse angeordnet sind und somit innerhalb einer feststehenden Umgebung (z.B. das Gehäuse des Ventilaufsatzes) verschoben und axial bewegt werden. Somit kann der elektronische Motor direkt mit dem Getriebe gekoppelt werden. Damit ergibt sich eine relativ einfache und wartungsarme Verbindung.

Es ist bevorzugt, dass das Getriebe über einen Gewindebolzen mit dem Ventilstift gekoppelt ist. Die Rotationsbewegung des elektronischen Motors wird über das Getriebe mittels des Gewindebolzens in eine axiale Bewegung umgewandelt. Dabei wird zum Halten der Position des Motors keine elektrische Energie benötigt. Ein Verstellen des elektronischen Motors und damit auch der Position des Ventilstifts durch sogenanntes Kriechen kann also durch die Kopplung von Getriebe und elektronischem Motor über einen Gewindebolzen mit dem Ventilstift wirkungsvoll verhindert werden. Der Gewindebolzen kann in einer bevorzugten Ausgestaltung auch Teil des Getriebes sein, also direkt mit dem Motor verbunden sein. Eine gewünschte Übersetzung erfolgt dann durch die Wahl einer geeigneten Gewindesteigung. Der Gewindebolzen kann auch scheibenförmig ausgebildet sein, also mit Außengewinde und relativ geringer Bolzenlänge gemessen am Bolzendurchmesser.

In einer vorteilhaften Ausgestaltung der Erfindung ist ein thermoelektrischer Generator als Energieerzeugungseinrichtung vorgesehen und direkt am Ventilaufsatz oder an einem Heizungsvorlauf angebracht. Thermoelektrische Generatoren weisen den Vorteil auf, dass sie einfach aufgebaut sind, zuverlässig arbeiten und eine sehr lange Lebensdauer haben. Zudem sind sie sehr klein, benötigen dadurch sehr wenig Platz und können vorzugsweise flach verbaut werden. Ein thermoelektrischer Generator besteht zum Beispiel aus mehreren in Reihe geschalteten Thermoelementen und erzeugt elektrische Energie direkt aus Wärme. Dazu werden zwei unterschiedliche Metalle (z.B. Ni, Cr, Fe, Cu, Pt, Rh) oder Halbmetalle (Ge, Si, Se, Te) oder vorzugsweise Halbleitermaterialien (Bi₂Te₃, PbTe, SiGe, BiSb oder FeSi₂) kombiniert. Diese Metalle oder Halbleiter werden einem möglichst großen Temperaturunterschied ausgesetzt. Ein Ende des Leiters sollte also an einem möglichst warmen Ort angebracht sein, während das andere Ende des Leiters an einem möglichst kühlen Ort angebracht werden sollte. Vorzugsweise sollten diese Temperaturunterschiede auf möglichst kleinem Raum vorliegen. Ausgehend von dem Temperaturunterschied entsteht eine elektrische Spannung, die auf dem Seebeck-Effekt beruht.

Dabei kann der thermoelektrische Generator direkt am Ventilaufsatz mit Verbindung zum Heizungsvorlauf angebracht sein. Somit kann der thermoelektrische Generator in den Ventilaufsatz integriert werden und benötigt keine zusätzlichen Installationsschritte.

In einer alternativen Ausgestaltung der Erfindung kann der thermoelektrische Generator außerhalb des Ventilaufsatzes am Heizungsvorlauf angebracht werden. Die kalte Seite des thermoelektrischen Generators sollte sich an einem möglichst kalten Ort befinden, wobei dieses meist die Raum- bzw. Umgebungstemperatur darstellt. Die warme Seite kann dann in Anlage mit dem Heizungsvorlauf liegen, so dass eine hohe Temperaturdifferenz zwischen warmer und kalter Seite erhalten wird.

Eine hohe Temperaturdifferenz kann aber auch erreicht werden, wenn der thermoelektrische Generator im Gewindebereich des Ventilaufsatzes angebracht wird und gleichzeitig eine Kühlung mit Umgebungsluft durch Lüftungsschlitze oder Kühlrippen im Gehäuse des Ventilaufsatzes stattfindet. Zusätzliche Kühlkörper oder Kühlrippen können dabei den Kühleffekt verstärken und somit eine Temperaturdifferenz vergrößern.

Bei einem Ventilaufsatz mit einem thermoelektrischen Generator zur Stromerzeugung ist es zudem günstig, wenn eine Energieerzeugungseinrichtung, insbesondere ein Photovoltaikelement vorgesehen ist. So liegt eine weitere Energiequelle vor. Ein Photovoltaikelement wandelt Lichtenergie in elektrische Energie um. Eine Ausgestaltung von Photovoltaikelementen stellen beispielsweise Solarzellen dar. Mit dieser zusätzlichen Energiequelle wird die Ausfallsicherheit erhöht. Insbesondere im Anschluss an einen Zeitraum, in dem keine Erwärmung erfolgt ist, kann die durch den thermoelektrischen Generator bereitgestellte elektrische Energie nicht ausreichen, eine Temperaturregelung sicherzustellen. Durch die zusätzliche Energie, die vom Photovoltaikelement bereitgestellt wird, sollte aber immer genug Energie zur Verfügung stehen

In einer weiteren wichtigen Ausgestaltung der Erfindung ist eine Energiespeichereinrichtung vorgesehen. Diese kann beispielsweise als Doppelschichtkondensator, als Akkumulator oder als chemischer Speicher ausgebildet sein und garantiert eine unterbrechungsfreie Energieversorgung. Eine durch Energiemangel bedingte Funktionsstörung des Ventilaufsatzes kann so nahezu komplett ausgeschlossen werden.

Vorteilhaft ist es weiterhin, wenn eine Benutzerschnittstelle am Ventilaufsatz vorgesehen ist, die insbesondere drahtlos ansteuerbar ist. Eine Benutzerschnittstelle bietet die Möglichkeit, manuell gewünschte Parameter, wie Ein- und Ausschaltzeiten und/oder gewünschte Raumtemperaturen (Solltemperaturen) vorzugeben und somit die Benutzerschnittstelle zu programmieren. Die Eingabe kann dazu zum Beispiel über Steuertasten vorgenommen werden. Dabei ist es sehr benutzerfreundlich, wenn die Parameter auch über externe Geräte, wie Smartphone, Computer, Fernbedienung usw. eingegeben werden können. Dazu ist es besonders vorteilhaft, wenn die Benutzerschnittstelle auch drahtlos ansteuerbar ist, wozu eine Schnittstelle für einen Funkstandard, wie z.B. WLAN, Infrarot, Bluetooth, GSM, UMTS usw. vorgesehen sein kann. Insbesondere für eine manuelle Programmierung an der Benutzerschnittstelle ist es von Vorteil, wenn die eingegebenen Parameter direkt über ein vorhandenes Display kontrolliert werden können. Aber auch die Solltemperatur oder die Isttemperatur können über ein solches Display angezeigt werden. Dies kann einerseits über Klartextinformationen erfolgen, aber auch Anzeigen mit optischen Informationen, wie kleinen Symbolen oder Farbverläufen sind möglich. Eine besonders bevorzugte Ausführungsform sieht dazu ein Display mit Touchfunktion vor. Dadurch ist eine direkte Eingabe über das Display möglich, ohne dass zusätzliche Steuertasten benötigt werden. Für die Benutzerschnittstelle ist also nicht viel Raum erforderlich, der Ventilaufsatz kann vielmehr klein gehalten werden.

Für die Verbindung von Ventilaufsatz und Regelventil des Heizkörpers sieht die Erfindung neben der am Markt üblichen Verschraubung ein auf den Ventilstift eines Heizkörperregelventils drückendes Ventilelement, z.B. einen Ventilteller, vor.

Weiterhin sieht die Erfindung ein Heizkörperregelventil mit einem Ventilaufsatz vor, wobei der Ventilstift des Heizkörperregelventils mit einem Ventilelement (z.B. einem Ventilteller) des Heizkörperregelventils zusammenwirkt. Der erfindungsgemäße Ventilaufsatz kann einfach und bequem auf ein handelsübliches und standardisiertes Heizkörperregelventil aufgeschraubt werden.

Weitere Merkmale, Einzelheiten und Vorteil ergeben sich aus dem Wortlaut der Ansprüche sowie aus der folgenden Beschreibung eines Ausführungsbeispiels anhand der Zeichnung. Es zeigt:

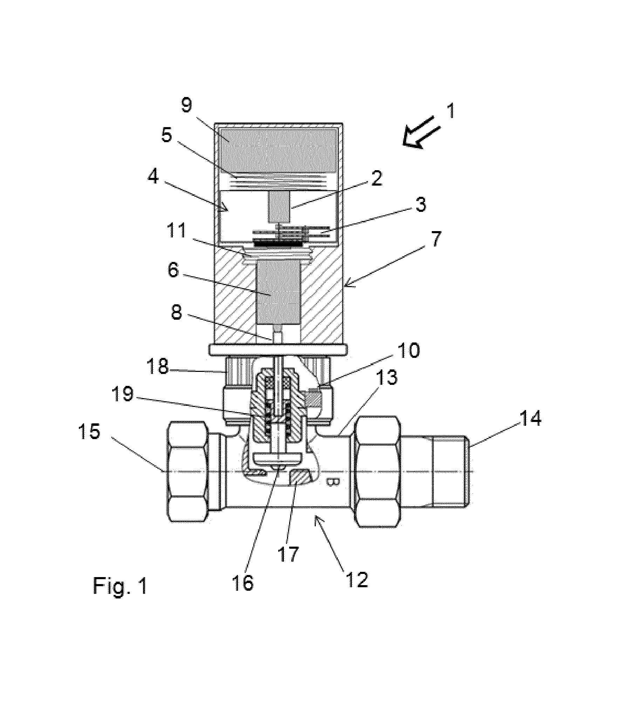

- Fig. 1: Schnittdarstellung eines Ventilaufsatzes mit Heizkörperregelventil mit elektronischem Motor, Ausdehnungskörper und Feder

In Fig. 1 ist der allgemein mit 1 gekennzeichnete Ventilaufsatz für ein handelsübliches und standardisiertes Heizkörperregelventil 12 in einer Schnittdarstellung gezeigt. Der Ventilaufsatz 1 weist ein Gehäuse 7 auf, in dem der elektronische Motor 2 axial beweglich angeordnet ist. Der Motor wirkt mit einem Ventilstift 8 zusammen. Die Feder 5 ist in Reihe mit dem elektronischen Motor 2 angeordnet und wirkt auf den Motor 2 und auf den Ventilstift 8, wodurch ein Gegendruck auf den Ventilstift 8 erzeugt wird. Ein temperaturabhängiges Ausdehnungselement 6 ist zwischen dem Ventilstift 8 und einem Gewindebolzen 11 vorgesehen und ebenfalls in Reihe mit dem elektronischen Motor 2, der Feder 5 und dem Ventilstift 8 angeordnet. Dabei ist das temperaturabhängige Ausdehnungselement 6 axial beweglich und kann die Bewegung des elektronischen Motors 2 auf den Ventilstift 8 übertragen. Der elektronische Motor 2 ist zusammen mit einem Getriebe 3 in einem Antriebsgehäuse 4 angeordnet, welches seinerseits in dem Gehäuse 7 axial verschiebbar gelagert ist. Über einen Gewindebolzen 11 wird die vom elektronischen Motor 2 erzeugte rotatorische Bewegung in eine lineare Bewegung übertragen. Dazu sind der elektronische Motor 2 und das Getriebe 3 über den Gewindebolzen 11 mit dem Ventilstift 8 gekoppelt.

Um den erfindungsgemäßen Ventilaufsatz 1 energieautark zu gestalten, ist ein thermoelektrischer Generator 10 als Energieerzeugungseinrichtung vorgesehen. Dieser ist entweder direkt am Ventilaufsatz 1 oder an einem nicht gezeigten Heizungsvorlauf angebracht. Die von dem thermoelektrischen Generator 10 erzeugte Energie wird in einer nicht gezeigten Energiespeichereinrichtung zwischengespeichert und kann von dort zu jeder Zeit abgerufen werden. Der erfindungsgemäße Ventilaufsatz 1 kann bequem auf ein Heizkörperregelventil 12, das ein Ventilgehäuse 13 mit einem Einlass 15 und einem Auslass 14 aufweist, aufgeschraubt werden. Der Ventilstift 8 des Ventilaufsatzes 1 steuert ein Ventilelement 16 des Heizkörperregelventils 12, das mit einem Ventilsitz 17 zusammenwirkt, und kann auf diese Weise den Warmwasserdurchfluss durch einen nicht gezeigten Heizkörper regulieren. Eine Ventil-Feder 19 wirkt entgegen der Feder 5 des Ventilaufsatzes 1 auf das Ventilelement 16. Durch den elektronischen Motor 2 muss daher eine Stellkraft erzeugt werden, die der Differenz zwischen der Kraft der Ventil-Feder 19 und der Feder 5 des Ventilaufsatzes 1 entspricht oder diese übersteigt. Die erforderliche Stellkraft wird also um die Kraft der Feder 5 vermindert.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte können sowohl für sich, als auch in den verschiedensten Kombinationen erfindungswesentlich sein.

**Bezugszeichenliste**

| | | | |
|---|---|---|---|
| 1 | Ventilaufsatz | 12 | Heizkörperregelventil |
| 2 | elektronischer Motor | 13 | Ventilgehäuse |
| 3 | Getriebe | 14 | Auslass |
| 4 | Antriebsgehäuse | 15 | Einlass |
| 5 | Feder | 16 | Ventilelement |
| 6 | Ausdehnungselement | 17 | Ventilsitz |
| 7 | Gehäuse | 18 | Verbindung |
| 8 | Ventilstift | 19 | Ventil-Feder |
| 9 | Elektronikgehäuse | 20 | Scheibe |
| 10 | thermoelektrischer Generator | | |
| 11 | Gewindebolzen | | |

## Patentansprüche

1. Ventilaufsatz (1), insbesondere für ein Heizkörperregelventil (12), mit einem Gehäuse (7), in dem ein elektronischer Motor (2) angeordnet ist, der mit einem Ventilstift (8) zusammenwirkt,
**dadurch gekennzeichnet, dass** eine Feder (5) in Reihe mit dem elektronischen Motor (2) auf den Ventilstift (8) wirkt.

2. Ventilaufsatz (1) nach Anspruch 1,
**dadurch gekennzeichnet, dass** ein temperaturabhängiges Ausdehnungselement (6) vorgesehen ist, welches in Reihe mit dem elektronischen Motor (2), der Feder (5) und dem Ventilstift (8) angeordnet ist und insbesondere beweglich ist.

3. Ventilaufsatz (1) nach einem der vorhergehenden Ansprüche,
**dadurch gekennzeichnet, dass** der elektronische Motor (2) axial beweglich in dem Gehäuse (7) angeordnet ist, wobei zwischen elektronischem Motor (2) und Gehäuse (7) die Feder (5) angeordnet ist.

4. Ventilaufsatz (1) nach einem der vorhergehenden Ansprüche,
**dadurch gekennzeichnet, dass** der elektronische Motor (2) und ein Getriebe (3) in einem Antriebsgehäuse (4) angeordnet sind, wobei das Antriebsgehäuse (4) axial verschiebbar gelagert ist.

5. Ventilaufsatz nach Anspruch 4,
**dadurch gekennzeichnet, dass** das Getriebe (3) über einen Gewindebolzen (11) mit dem Ventilstift (8) gekoppelt ist.

6. Ventilaufsatz (1) nach einem der vorhergehenden Ansprüche,
**dadurch gekennzeichnet, dass** ein thermoelektrischer Generator (10) als Stromerzeugungseinrichtung vorgesehen ist und direkt am Ventilaufsatz (1) oder an einem Heizungsvorlauf angebracht ist.

7. Ventilaufsatz (1) nach einem der vorhergehenden Ansprüche,
**dadurch gekennzeichnet, dass** eine Stromerzeugungseinrichtung, insbesondere ein Photovoltaikelement vorgesehen ist.

8. Ventilaufsatz (1) nach einem der vorhergehenden Ansprüche,
**dadurch gekennzeichnet, dass** eine Energiespeichereinrichtung vorgesehen ist.

9. Ventilaufsatz (1) nach einem der vorhergehenden Ansprüche,
**dadurch gekennzeichnet, dass** eine Benutzerschnittstelle am Ventilaufsatz (1) vorgesehen ist, die insbesondere drahtlos ansteuerbar ist.

10. Heizkörperregelventil (12) mit einem Ventilaufsatz (1) nach einem der Ansprüche 1 bis 9, wobei der Ventilstift (8) mit einem Ventilelement (16) des Heizkörperregelventils (12) zusammenwirkt.
